Europäisches Patentamt

European Patent Office

Office européen des brevets

(19)

(11) **EP 0 467 367 B1**

(12) **EUROPÄISCHE PATENTSCHRIFT**

(45) Veröffentlichungstag und Bekanntmachung des
Hinweises auf die Patenterteilung:
**29.01.1997  Patentblatt 1997/05**

(51) Int Cl.6: **H04M 3/00**, H04M 19/00,
H04B 1/58

(21) Anmeldenummer: **91112036.8**

(22) Anmeldetag: **18.07.1991**

(54) **Teilnehmeranschlussschaltung zum Anschluss einer Teilnehmeranschlussleitung für die Übertragung von analogen Teilnehmersignalen an die Vermittlungsstelle einer digitalen Zeitmultiplex-Fernsprechvermittlungsstelle**

Subscriber line circuit for connection of a subscriber line for the transmission of analogue subscriber signals to a digital time division multiplex telephone exchange

Circuit d'interface de ligne d'abonné pour la connexion d'une ligne d'abonné pour la transmission de signaux analogiques d'abonné à un central téléphonique numérique à multiplexage temporel

(84) Benannte Vertragsstaaten:
**AT BE CH DE ES FR GB GR IT LI LU NL SE**

(30) Priorität: **19.07.1990  DE 4022961**
**20.09.1990  DE 4029819**

(43) Veröffentlichungstag der Anmeldung:
**22.01.1992  Patentblatt 1992/04**

(73) Patentinhaber: **SIEMENS AKTIENGESELLSCHAFT**
**80333 München (DE)**

(72) Erfinder: **Lechner, Robert, Dipl.-Ing.**
**A-3100 St. Pölten (AT)**

(56) Entgegenhaltungen:
EP-A- 0 163 298          EP-A- 0 217 130
GB-A- 2 091 973          US-A- 4 661 979

- SIEMENS COMPONENTS, Band XXIII, Nr. 1, Februar 1988, Seiten 8-13, Berlin, DE; M. ARSAC et al.: "SICOFI - A filter for every SLIC"
- ERICSSON REVIEW, Band 60, Nr. 4, 1983, Seiten 186-191, Stockholm, SE; G. ERIKSSON et al.: "Line circuit component SLAC for AXE 10"

**Beschreibung**

Die Erfindung betrifft eine Teilnehmeranschlußschaltung zum Anschluß einer Teilnehmerleitung für die Übertragung von analogen Teilnehmersignalen von und zu der Vermittlungsstelle eines digitalen Zeitmultiplex-Fernsprechnetzes mit einer Teilnehmer-Schnittstellenschaltung (SLIC), die zwei Operationsverstärker (OP1, OP2), über die die von der Vermittlungsstelle zum an die Teilnehmeranschlußleitung angeschlossenen Teilnehmerendgerät zu sendenden Signale verstärkt und im Gegentakt über jeweils einen die Serienschaltung eines Widerstandes (Rz/2) und eines Kondensators (Ck) enthaltenden Koppel zweig in die über Speisewiderstände (Rsp1 bis Rsp4) versorgte Teilnehmeranschlußleitung eingespeist werden, während das symmetrische, vom Teilnehmerendgerät kommende Teilnehmersignal über einen Teilnehmerverstärker (OP3) an die Vermittlungsstelle weitergeleitet wird und bei der ein von dem den Vierdraht-Sendeausgang darstellenden Ausgang des Teilnehmerverstärkers (OP3) zu den Eingängen der Operationsverstärker (OP1, OP2) führender, Filterelemente enthaltender Mitkopplungspfad zur Einstellung einer Zweidrahtimpedanz, die höher ist als die Impedanz der die Speisewiderstände (Rsp1, Rsp2, Rsp4) umfassenden Speisebrücke gebildet ist.

Ein Teilnehmeranschlußschaltung der oben genannten Art ist bereits aus dem Dokument GB-A-2 091 973 bekannt.

Bei einer solchen aus der europäischen Patentanmeldung mit der Veröffentlichungsnummer 0 246 546 bekannten Teilnehmeranschlußschaltung handelt es sich um einen Typ von Anschlußschaltung, der eine Alternative zu folgenden Teilnehmeranschlußleitungstypen darstellt:

Teilnehmeranschlußschaltungen mit Speisegabel-Übertrager, die vom Speisegleichstrom durchflossen sind und über die auch die Sprechsignale eingekoppelt werden;
Teilnehmeranschlußschaltungen mit einer Kombination von Speisedrosseln, die der Speisespannung überlagerte Störspannungen zu dämpfen haben, und nicht stromdurchflossenem Übertrager;
Teilnehmeranschlußschaltungen, die Schaltregler mit Potentialtrennung und nicht stromdurchflossenem Übertrager aufweisen;
Teilnehmeranschlußschaltungen mit monolythischer Teilnehmerleitungsschnittstellenschaltung und integrierten Leistungsverstärkern.

Gegenüber den letztgenannten Arten von Teilnehmeranschlußschaltungen stellt die erstgenannte Teilnehmeranschlußschaltung, bei der die Teilnehmerleitungsschnittstellenschaltung kapazitiv angekoppelt ist, eine Lösung dar, die von Anzahl und Art der verwendeten Bauteile her relativ kostengünstig ist.

Bei dieser bekannten Teilnehmeranschlußschaltung muß allerdings vorausgesetzt werden, daß die Speisebrücke hochohmiger ist als die Zweidrahtimpedanz, so daß der Einsatz derselben in Ländern, in denen ein niedriger Speisebrückenwiderstand gefordert ist, nicht in Frage kommt.

Aus dem Dokument SIEMENS COMPONENTS, Band XXIII, Nr. 1, Februar 1988, Seiten 8-13, Berlin, DE; M. Arlac et al.: "SICOFI-A filter for every SLIC" ist ein Baustein SICOFI bekannt, der dazu bestimmt ist, mit einer Teilnehmerleitungs-Schnittstellenschaltung zusammengeschaltet zu werden und der ein programmierbares Filter enthält, mit dessen Hilfe die Zweidrahtimpedanz eingestellt wird.

Dabei ist jedoch vorgesehen, eine solche Einstellung ausschließlich mittels dieses Bausteins vorzunehmen.

Der Erfindung liegt die Aufgabe zugrunde, eine Teilnehmeranschlußschaltung der eingangs genannten Art dahingehend auszugestalten, daß ihre Einsatzmöglichkeiten erweitert werden.

Diese Aufgabe wird durch die im Patentanspruch 1 angegebenen Merkmale gelöst.

Durch den erfindungsgemäß innerhalb der Teilnehmerleitungsschnittstellenschaltung gebildeten, Filterelemente enthaltenden Mitkopplungspfad ist erreicht, daß die sich ergebende Zweidrahtimpedanz höher ist als die Impedanz der die Speisewiderstände umfassenden Speisebrücke. Damit ist das der eingangs erwähnten bekannten Teilnehmeranschlußschaltung zugrundeliegende Schaltungsprinzip auch anwendbar, wenn der Widerstand der Speisebrücke einen relativ niedrigen Wert hat, der nicht weiter erhöht werden darf. Eine Feineinstellung läßt sich dabei auf einfache Weise mit Hilfe eines programmierbaren Filters in einem sowieso vorhandenen Baustein erzielen, das auch dazu dient, der Zweidrahtimpedanz einen komplexen Wert zu geben. Durch die letztgenannte Eigenschaft erübrigen sich sonst zum Bilden einer komplexen Zweidrahtimpedanz benötigte präzise und somit teure Kondensatoren.

Weitere Ausgestaltungen der Erfindung ergeben sich aus den Unteransprüchen.

So ist gemäß einer ersten weiteren Ausgestaltung in dem mit dem Schnittstellenbaustein zusammengeschalteten Baustein ein weiteres den Verdrahtungsempfangszweig mit dem Vierdrahtsendezweig verbindendes programmierbares Filter vorgesehen, das die Kompensation der beim Zweidraht-Vierdrahtübergang vom Vierdraht-Empfangszweig auf den Vierdraht-Sendezweig gelangendem Signalanteile bewirkt.

Dies bringt den Vorteil mit sich, daß eine Kompensationsschaltung, wie sie bei der eingangs genannten Teilnehmeranschlußschaltung Bestandteil der dortigen Schnittstellenschaltung ist, entfällt und damit die Gefahr von Unsymmetrien, die Toleranzen der Kondensatoren einer solchen Kompensationsschaltung mit sich bringen, nicht mehr vorliegt.

Gemäß einer anderen Ausgestaltung der Erfindung sind den Speisewiderständen hochohmige Widerstände in Reihe geschaltet, die niederohmig überbrückbar sind, in welchem Fall der Mittkopplungsdraht eine Schaltstrecke umfaßt, mittels deren jeweils dann eine Unterbrechung des Mittkopplungspfads erfolgt, wenn die genannten hochohmigen Widedrstände im Speisekreis wirksam geschaltet sind. Diese hochohmigen Widerstände werden in bekannter Weise im Betriebszustand "Ruhe" wirksam geschaltet, um die erforderliche Speiseleistung zu verringern. Durch die Möglichkeit, den genannten Mitkopplungspfad in einem solchen Betriebszustand zu unterbrechen, kann verhindert werden, daß durch den Mitkopplungspfad aufgrund von Schleifverstärkungen, die größer als +1 sind, Instabilitäten entstehen.

Eine andere weitergehende Ausgestaltung der Erfindung läuft auf eine Verbesserung des Überspannungsschutzes einer solchen Schaltung hinaus und besteht darin, zwischen Mittelanzapfungen der Widerstände der an die Operationsverstärkerausgänge angeschlossenen Koppelzweige und im einen Fall einen Erdpotential führenden Schaltungspunkt und im anderen Fall der Speisepotential führenden Zuleitung zur Speisebatterie jeweils die Reihenschaltung zweier antiparallel geschalteter Zenerdioden anzuschließen, womit einerseits ein Schutz der Operationsverstärker der Teilnehmerleitungs-Schnittstellenschaltung gewährleistet ist andererseits im Gegensatz zu anderen Lösungen Koppelkondensatoren Verwendung finden können, an die keine besonderen Anforderungen an die Spannungsfestigkeit zu stellen sind.

Nachstehend wird die Erfindung anhand von Ausführungsbeispielen unter Bezugnahme auf eine Zeichnung näher erläutert.
In der Zeichnung zeigen:

FIG 1 das Prinzipschaltbild einer ersten Ausführungsform der ererfindungsgemäßen Schaltungsanordnung,
FIG 2 das Prinzipschaltbild einer zweiten Ausführungsform der erfindungsgemäßen Schaltungsanordnung,
FIG 3 das Detailschaltbild der Teilnehmerschnittstellenschaltung des ersten Ausführungsbeispieles.

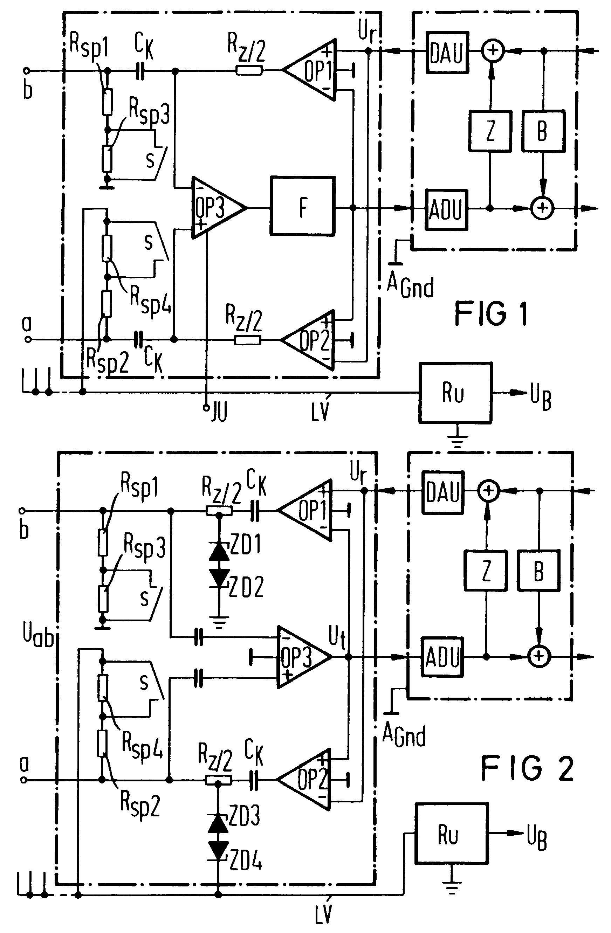

Die FIG 1 zeigt als Bestandteile einer erfindungsgemäßen Teilnehmeranschlußschaltung den Teilnehmerschnittstellenbaustein SLIC und einen Baustein SICOFI.

Der Baustein SICOFI dient in erster Linie der Analog-Digital-Umsetzung der von einem Teilnehmerendgerät herkommenden Sprachsignale und deren PCM-Codierung, sowie umgekehrt der Digital-Analog-Wandlung der vom Koppelfeld der Vermittlungsstelle herkommenden Digitalsignale zusammen mit der zugehörigen Bandbegrenzung.

Wesentliche Bestandteile der Teilnehmerleitungs-Schnittstellenschaltung sind Operationsverstärker OP1 und OP2, über die die von der Vermittlungsstelle, also über den Baustein SICOFI herkommenden und an die Teilnehmerendgeräte zu sendenden Signale verstärkt werden und im Gegentakt über jeweils einen die Serienschaltung eines Widerstandes Rz/2 und eines Kondensators Ck enthaltenden Koppelzweig in die Teilnehmeranschlußleitung eingespeist werden. Die Teilnehmeranschlußleitung ist mit ihren Adern an die Anschlüsse a und b der Teilnehmerleitungs-Schnittstellenschaltung angeschlossen zu denken.

Die Stromversorgung der Teilnehmeranschlußleitung erfolgt durch eine die Speisespannung UB liefernde Speisebatterie über die Versorgungsleitung LV sowie über Speisewiderstände Rsp1 und Rsp2, denen jeweils hochohmige Widerstände Rsp3 und Rsp4 in Reihe geschaltet sind, die mittels Schaltstrecken s niederohmig überbrückt werden können.

Das symmetrische vom Teilnehmerendgerät über die Teilnehmeranschlußleitung ankommende Teilnehmersignal wird über einen Teilnehmerverstärker OP3 an den Baustein SICOFI und von da an die Vermittlungsstelle weitergeleitet.

Ein von dem den Vierdraht-Sendeausgang darstellenden Ausgang des Teilnehmerverstärkers OP3 in der Teilnehmerleitungs-Schnittstellenschaltung SLIC zu den Eingängen der Operationsverstärker OP1 und OP2 führender Mitkopplungspfad enthält Filterelemente F. Dieser Mitkopplungspfad wird in einer Grundeinstellung so eingestellt, daß die Zweidrahtimpedanz höher ist als die Impedanz der die Speisewiderstände enthaltenden Speisebrücke, von denen vorausgesetzt wird, daß sie vorschriftsbedingt so niedrig sind, daß sich ohne diese Maßnahme nicht der vorgeschriebene Wert der Zweidrahtimpedanz einstellen ließe.

In der FIG 1 ist von dem erwähnten Baustein SICOFI lediglich am Vierdraht-Empfangs-Ausgang ein Digital-Analog-Umsetzer DAU und am Vierdraht-Sendezweig-Eingang ein Analog-Digital-Wandler ADU, ferner ein programmierbares Filter Z, das den Vierdraht-Sendezweig Sendezweig mit dem Vierdraht-Empfangszweig innerhalb des Bausteins verbindet, sowie ein programmierbares Filter B dargestellt, das eine Verbindung zwischen dem Vierdraht-Empfangszweig mit dem Vierdraht-Sendezweig herstellt. Das Filter Z des Bausteins SICOFI dient dazu, der Zweidrahtimpedanz einen komplexen Wert zu geben und dabei in Ergänzung der erwähnten Grundeinstellung des Realteils der Zweidrahtimnpedanz eine entsprechende Feineinstellung zu bewirken.

Das programmierbare Filter B bewirkt eine Kompensation der vom Vierdraht-Zweidraht-Übergang durch Reflexion vom Vierdraht-Empfangszweig auf den Vierdraht-Sendezweig gelangenden Signalanteile, indem es entsprechende Signalanteile vom Vierdraht-Empfangszweig ableitet und gegenphasig den Signalen auf dem Vierdraht-Sendezweig überlagert.

Bei dem in FIG 1 dargestellten Ausführungsbeispiel müssen im Hinblick auf über die Teilnehmeranschlußleitung eingekoppelte Überspannungen die Speisewiderstände Rsp1 bis Rsp4 und die Koppelkondensatoren Ck so bemessen sein, daß sie einen entsprechend erhöhten Stromstoß vertragen bzw. eine Spannungsfestigkeit aufweisen, die höher ist als die Aufladespannung durch den Stromstoß. Die Treiberverstärker benötigen einen an sich bekannten aus Dioden oder Zenerdioden aufgebauten Überspannungsfeinschutz.

Für den Fall, daß, wie erläutert, den Speisewiderständen Rsp1 und Rsp2 hochohmige Widerstände Rsp3 und Rsp4 in Reihe geschaltet sind, die niederohmig durch Schaltstrecken s überbrückt werden können, besteht eine Möglichkeit, den Mitkopplungspfad zu unterbrechen, was hier durch einen entsprechenden Steuerleitungsanschluß su am Teilnehmervertstärker OP3 angedeutet ist. Der Mitkopplungspfad wird dann aufgetrennt, wenn die genannten hochohmigen Widerstände im Speisekreis wirksam geschaltet sind, um zu verhindern, daß wegen Schleifenverstärkungen, die größer als +1 sind, Instabilitäten entstehen.

Das Ausführungsbeispiel gemäß FIG 2 unterscheidet sich von demjenigen gemäß FIG 1 zum einen dadurch, daß in den Koppelzweigen die Aufeinanderfolge des Koppelwiderstandes Rz/2 und des Koppelkondensators Ck vertauscht sind und zum anderen dadurch, daß die genannten Widerstände Mittelanzapfungen aufweisen, an die jeweils die Reihenschaltung antiseriell geschalteter Zenerdioden angeschlossen sind, deren jeweiliger anderer Anschluß im einen Fall einen Erdpotential führenden Schaltungspunkt, im anderen Fall an einen Speisepotential führenden Schaltungspunkt angeschlossen ist. Durch diese Zenerdioden sind die Operationsverstärker OP1 und OP3 und die Koppelkondensatoren gegen Überspannungen geschützt. Die Kondensatoren der Koppelzweige brauchen daher nicht wie im vorgenannten Fall eine besonders hohe Spannungsfestigkeit aufzuweisen.

Bei beiden Ausführungsbeispielen ist eine Filterschaltung RU vorhanden, die einer Gruppe von Teilnehmeranschlußschaltungen, von denen die Figuren jeweils eine zeigen, gemeinsam ist und die in der gemeinsamen Zuleitung LV zu einer Speisestromquelle liegt, die die Speisespannung UB liefert. Diese Filterschaltung dient dazu, der Speisespannung überlagerte Störspannungen zu unterdrücken.

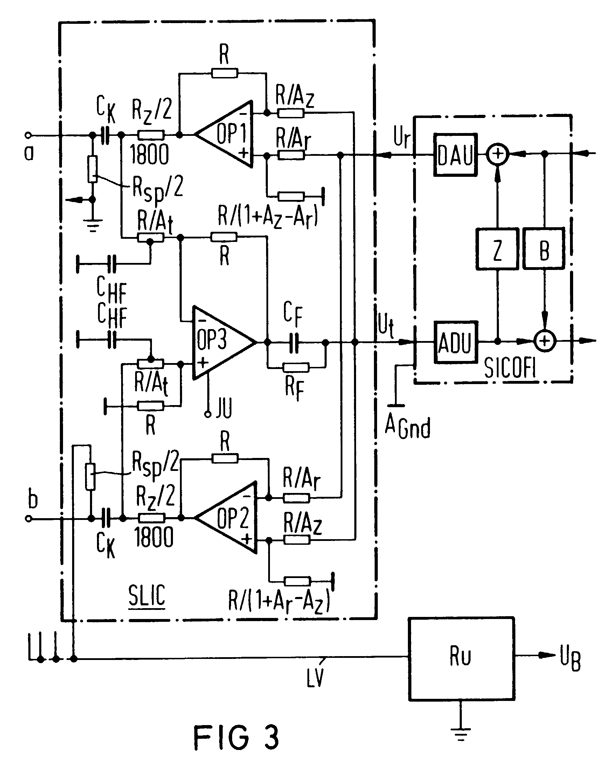

Da pro Vermittlungsstelle eine Vielzahl solcher Gruppen gemäß FIG 1 vorhanden sind, stellt die Anschaltung der erwähnten Filterschaltung RU eine teilzentrale Lösung der Störspannungsüberbrückung dar. Als günstige Ausführungsform für eine solche Filterschaltung ist die Realisierung als Regelschaltung vorgeschlagen worden, der die auf einer Verbindungsleitung zu einer zentralen Speisestromquelle auftretende störbehaftete Speisespannung als zu regelnde Größe zugeführt wird und die als Stellgröße eine der Störspannung entsprechende Kompensationsspannung liefert, die über einen Übertrager mit großem Übersetzungsverhältnis, dessen die niedrige Windungszahl aufweisende Sekundärwicklung von der Summe der Speiseströme für die an der Mehrzahl der Teilnehmerleitungs-Schnittstellen angeschlossenen Endgeräte durchflossen wird, der störbehafteten Speisespannung zur Erzeugung einer störgedämpften Speisespannung überlagert wird. Die FIG 3 zeigt ein Detailschaltbild der Ausführungsvariante der erfindungsgemäßen Schaltungsanordnung gemäß FIG 1, aus dem sich insbesondere Schaltungsdetails im Zusammenhang mit der Beschaltung der Operationsverstärkereingänge sowie Angaben über die Dimensionierung der Schaltelemente in der Zusammenschau mit den nachfolgenden Angaben entnehmen lassen:

$$R = 40\ \text{KOhm};\ Rsp = 200\ \text{Ohm};\ Rz/2 = 1800\ \text{Ohm}$$

$$Ar = 1{,}75;\ At = 1{,}2;\ Az = 2{,}5$$

$$Ck = 2{,}2,\ \mu F;$$

$$CF = \frac{Ck/2}{x}$$

$$x = 379.$$

**Patentansprüche**

1. Teilnehmeranschlußschaltung zum Anschluß einer Teilnehmerleitung für die Übertragung von analogen Teilnehmersignalen von und zu der Vermittlungsstelle eines digitalen Zeitmultiplex-Fernsprechnetzes mit einer Teilnehmer-Schnittstellenschaltung (SLIC), die zwei Operationsverstärker (OP1, OP2), über die die von der Vermittlungsstelle zum an die Teilnehmeranschlußleitung angeschlossenen Teilnehmerendgerät zu sendenden Signale verstärkt und im Gegentakt über jeweils einen die Serienschaltung eines Widerstandes (Rz/2) und eines Kondensators (Ck) enthaltenden Koppelzweig in die über Speisewiderstände (Rsp1 bis Rsp4) versorgte Teilnehmeranschlußleitung eingespeist werden, während das symmetrische, vom Teilnehmerendgerät kommende Teilnehmersignal über einen Teilnehmerverstärker (OP3) an die Vermittlungsstelle weitergeleitet wird und bei der ein von dem den Vierdraht-Sendeausgang darstellenden Ausgang des Teilnehmerverstärkers (OP3) zu den Eingängen der Operationsverstärker (OP1, OP2) führender, Filterelemente enthaltender Mitkopplungspfad zur Einstellung einer Zweidrahtimpedanz, die höher ist als die Impedanz der die Speisewiderstände (Rsp1, Rsp2, Rsp4) umfassenden Speisebrücke gebildet ist, **dadurch gekennzeichnet,**
daß durch die Filterelemente (F) des Mitkopplungspfades eine Grundeinstellung des Realteils der Zweidrahtimpedanz bewirkt wird, und daß in einem mit der Teilnehmerleitungs-Schnittstellenschaltung (SLIC) zusammengeschalteten unter anderem auch die Analog-Digital-Wandlung bewirkenden Baustein (SICOFI) ein programmierbares Filter (Z) vorgesehen ist, das dort den Vierdraht-Sendezweig mit dem Vierdraht-Empfangszweig verbindet und neben der Herstellung eines komplexen Wertes der Zweidrahtimpedanz der Ergänzung der genannten Grundeinstellung des Realteils der Zweidrahtimpedanz zu dessen geforderten exakten Wert dient.

2. Teilnehmeranschlußschaltung nach Anspruch 1,
**dadurch gekennzeichnet**,
daß in dem mit der Teilnehmerleitungs-Schnittstellenschaltung (SLIC) zusammengeschalteten Baustein (SICOFI) ein weiteres, den Vierdraht-Empfangszweig mit dem Vierdraht-Sendezweig verbindendes programmierbares Filter (B) vorgesehen ist, das die Kompensation der beim Zweidraht-Vierdrahtübergang vom Vierdraht-Empfangszweig auf den Vierdraht-Sendezweig gelangenden Signalanteile bewirkt.

3. Teilnehmeranschlußschaltung nach Anspruch 1 oder 2,
**dadurch gekennzeichnet,**
daß den Speisewiderständen (Rsp1, Rsp2) hochohmige Widerstände (Rsp3, Rsp4) in Reihe geschaltet sind, die niederohmig überbrückbar sind, und daß der Mitkopplungspfad eine Schaltstrecke umfaßt, mittels deren jeweils dann eine Unterbrechung des Mitkopplungspfades erfolgt, wenn die genannten hochohmigen Widerstände (Rsp2, Rsp4) im Speisekreis wirksam geschaltet sind.

4. Teilnehmeranschlußschaltung nach einem der vorhergehenden Ansprüche,
**dadurch gekennzeichnet,**
daß zwischen Mittelanzapfungen der Widerstände (Rz/2) der an die Operationsverstärkerausgänge angeschlossenen Koppelzweige (Rz/2, Ck) und in einem Fall einem Erdpotential führenden Schaltungspunkt und im anderen Fall der Speisepotential führenden Zuleitung (LV) zur Speisebatterie jeweils die Reihenschaltung zweier antiseriell geschalteter Zenerdioden (Z) angeschlossen ist.

**Claims**

1. Subscriber line circuit for connection of a subscriber line for the transmission of analog subscriber signals from and to a digital time-division-multiplex telephone exchange, having a subscriber line interface circuit (SLIC), which has two operational amplifiers (OP1, OP2), by means of which the signals to be sent from the exchange to the subscriber terminal, which is connected to the subscriber line, are amplified and, in push-pull operation, are fed into the subscriber line, supplied via feed resistors (Rsp1 to Rsp4), via in each case a switching branch containing the series connection of a resistor (Rz/2) and a capacitor (Ck), while the symmetrical subscriber signals, coming from the subscriber terminal, is passed on via a subscriber amplifier (OP3) to the exchange, and in which a positive-feedback path, leading from the output of the subscriber amplifier (OP3) representing the four-wire sending output to the inputs of the operational amplifier (OP1, OP2) and containing filter elements, is formed for setting a two-wire impedance which is higher than the impedance of the feed bridge comprising the feed resistors (Rsp1, Rsp2, Rsp4), characterized in that the filter elements (F) of the positive-feedback path have the effect of bringing about a basic setting of the real part of the two-wire impedance, and in that in a module (SICOFI), which is connected together with the subscriber line interface circuit (SLIC) and, inter alia, also brings about the analog-digital conversion, there is provided a programmable filter (Z), which connects there the four-wire sending branch to the four-wire receiving branch and, in addition to establishing a complex value of the two-wire impedance, serves for supplementing the said basic setting of the real part of the two-wire impedance to give its required exact value.

2. Subscriber line circuit according to Claim 1, characterized in that, in the module (SICOFI) connected together with the subscriber line interface circuit (SLIC) there is provided a further programmable filter (8), which connects the four-wire receiving branch to the four-wire sending branch and brings about the compensation of the signal components passing from the four-wire receiving branch to the four-wire sending branch at the two-wire/four-wire transition.

3. Subscriber line circuit according to Claim 1 or 2, characterized in that connected in series with the feed resistors (Rsp1, Rsp2) are high-impedance resistors (Rsp3, Rsp4), which can be bridged at low impedance, and in that the positive-feedback path comprises a contact break, by means of which in each case an interruption of the positive-feedback path takes place whenever the said high-impedance resistors (Rsp2, Rsp4) in the feed circuit are activated.

4. Subscriber line circuit according to one of the preceding claims, characterized in that between centre taps of the resistors (Rz/2) of the switching branches (Rz/2, Ck), connected to the operational amplifier outputs, and in one case a circuit node carrying earth potential and in the other case the supply line (LV) carrying feed potential to the feed battery there is connected in each case the series connection of two Zener diodes (Z) connected in antiseries.

## Revendications

1. Circuit d'interface de ligne d'abonné pour la connexion d'une ligne d'abonné pour la transmission de signaux analogiques d'abonné depuis et vers un central téléphonique numérique à multiplexage temporel comprenant un circuit d'interface d'abonné (SLIC) qui comprend deux amplificateurs opérationnels (OP1, OP2) au moyen desquels les signaux à envoyer du central téléphonique au poste terminal d'abonné connecté à la ligne de connexion d'abonné sont amplifiés et sont alimentés, en push-pull, dans la ligne de connexion d'abonné alimentée par des résistances d'alimentation (Rsp1 à Rsp4) au moyen d'un branchement de couplage respectif contenant le montage en série d'une résistance (Rz/2) et d'un condensateur (Ck), tandis que le signal symétrique d'abonné venant du poste terminal d'abonné est transmis au central téléphonique par un amplificateur d'abonné (OP3), et dans lequel un trajet de réaction positive contenant des éléments de filtre et menant de la sortie de l'amplificateur d'abonné (OP3) représentant la sortie d'émission à quatre fils aux entrées des amplificateurs opérationnels (OP1, OP2) est formé pour le réglage d'une impédance bifilaire qui soit supérieure à l'impédance du pont d'alimentation comprenant les résistances d'alimentation (Rsp1, Rsp2, Rsp4), caractérisé en ce qu'un réglage de base de la partie réelle de l'impédance bifilaire est effectué par les éléments de filtre (F) du trajet de réaction positive, et en ce que l'on prévoit, dans un composant (SICOFI) interconnecté avec le circuit d'interface de ligne d'abonné (SLIC) et effectuant également, entre autres, la transformation analogique-numérique, un filtre programmable (Z) qui, à cet endroit, relie le branchement d'émission à quatre fils au branchement de réception à quatre fils et qui, en plus de la création d'une valeur complexe de l'impédance bifilaire, sert à compléter le réglage de base mentionné de la partie réelle de l'impédance bifilaire pour atteindre sa valeur exacte exigée.

2. Circuit d'interface de ligne d'abonné selon la revendication 1, caractérisé en ce que l'on prévoit, dans le composant (SICOFI) interconnecté avec le circuit d'interface de ligne d'abonné (SLIC), un filtre programmable (B) supplémentaire reliant le branchement de réception à quatre fils au branchement d'émission à quatre fils, lequel filtre effectue la compensation des portions de signal arrivant du branchement de réception à quatre fils sur le branchement d'émission à quatre fils lors du passage de deux fils à quatre fils.

3. Circuit d'interface de ligne d'abonné selon la revendication 1 ou 2, caractérisé en ce que des résistances de valeur ohmique élevée (Rsp3, Rsp4) sont montées en série avec les résistances d'alimentation (Rsp1, Rsp2), lesquelles résistances peuvent être court-circuitées de manière à avoir une faible valeur ohmique, et en ce que le trajet de réaction positive comprend une longueur de coupure au moyen de laquelle une interruption du trajet de réaction positive se produit à chaque fois que les résistances de valeur ohmique élevée mentionnées (Rsp2, Rsp4) sont connectées activement dans le circuit d'alimentation.

4. Circuit d'interface de ligne d'abonné selon l'une des revendications précédentes, caractérisé en ce que, entre des prises médianes des résistances (Rz/2) des branchements de couplage (Rz/2, Ck) connectés aux sorties des amplificateurs opérationnels et, dans un cas, un point de connexion conduisant le potentiel de la terre et, dans l'autre cas, la ligne d'arrivée (LV) conduisant le potentiel d'alimentation menant à la batterie d'alimentation, sont branchés, respectivement, les montages en série de deux diodes de Zener (Z) montées de manière antisérielle.

FIG 1

FIG 2

7

FIG 3